# EUROPÄISCHE PATENTSCHRIFT

(11) **EP 1 680 249 B1**
(45) Veröffentlichungstag und Bekanntmachung des Hinweises auf die Patenterteilung: **28.07.2010**
(21) Anmeldenummer: 04790734.0
(22) Anmeldetag: 22.10.2004
(51) Int. Cl.: B22D 41/38

(54) **SCHIEBEVERSCHLUSS MIT KUPPLUNG**
SLIDING CLOSING ELEMENT, WITH COUPLING
FERMETURE COULISSANTE A COUPLAGE

(30) Priorität: 31.10.2003 CH 186303
(43) Veröffentlichungstag der Anmeldung: 19.07.2006
(73) Patentinhaber: Stopinc Aktiengesellschaft, 6331 Hünenberg (CH)
(72) Erfinder: KELLER, Werner, CH-6312 Steinhausen (CH)
(74) Vertreter: Luchs, Willi
(86) Internationale Anmeldenummer: PCT/EP2004/011935
(87) Internationale Veröffentlichungsnummer: WO 2005/042190

(56) Entgegenhaltungen:
- EP-A- 0 110 028
- EP-A- 0 875 320

## Beschreibung

Die Erfindung betrifft einen Schiebeverschluss, für einen Zwischenverteiler oder ähnliche metallurgische Gefässe, dessen bewegliche Schieberplatte durch einen Antrieb mit einer Antriebsstange und einer mit ihr verbundenen Schubstange antreibbar ist.

Bei Schieberverschlüssen dieser Art wird bekanntlich die bewegliche Schieberplatte im Betrieb durch ihren Antrieb ständig in eine Oszillationsbewegung versetzt, der auch die Antriebsstange und die mit ihr verbundene Schubstange ausgesetzt sind.

Die Verbindung zwischen der Schubstange und der Antriebsstange ist mit Spiel ausgebildet. Dadurch besteht die Gefahr, dass im Betrieb infolge der Oszillationsbewegung und des vorhandenen Spiels Regelungenauigkeiten entstehen und damit die Funktionsfähigkeit des Schiebeverschlusses beeinträchtigt. Ausserdem ist die Ankoppelung der Schieberplatte an ihr Antriebsorgan in vielen Fällen umständlich.

Bei einer gattungsmässigen Kupplung für einen Schiebeverschluss nach der Druckschrift EP-0 110 028 bestehen diese obgenannten Probleme ebenso, denn mit diesen durch eine Feder radial nach aussen bolzenartig ausgebildeten Sperrer bildet sich zumindest mit der Zeit ein unerwSpiel bei diesem Rastgesperre, weil keine kraftschlüssige Verbindung zwischen der Einschaubklaue des Schieberteils und dem Rastgesperre bei der Kolbenstange vorhanden ist. Diese radial verstellbaren Sperrer dienen nur zur Kupplung, aber nicht für eine dauerhafte Aufhebung des Spiels.

Der Erfindung liegt die Aufgabe zugrunde, diese Nachteile zu vermeiden und einen Schiebeverschluss der eingangs genannten Art zu schaffen, der sich durch eine reglerkonforme Verbindung zwischen Schubstange und Antriebsstange auszeichnet, die zudem leicht und bequem bedienbar ist.

Diese Aufgabe wird, wie in den Ansprüchen 1 und 9, beansprucht, erfindungsgemäss dadurch gelöst, dass die Verbindung durch eine zwischen den gegenüberliegenden Enden beider Stangen angeordnete Kupplung mit zwei spielfrei ineinandergreifenden Kupplungsteilen gebildet ist.

Auf diese Weise ist es möglich, im Betrieb eine stets spielfreie Verbindung zwischen der Schubstange und der Antriebsstange trotz der Oszillationsbewegung dieser Teile aufrechtzuerhalten. Ausserdem wird das Ankoppeln der beweglichen Schieberplatte an ihr Antriebsorgan erheblich vereinfacht, da man nur die beiden Kupplungsteile ineinanderstecken muss, um die Verbindung zwischen Schubstange und Antriebsstange des Schieberplattenantriebes herzustellen.

Im Sinne einer konstruktiv einfachen, robusten und kompakten Konstruktion ist es gemäss der Erfindung vorgesehen, dass die Kupplung durch einen Kupplungskopf und eine ihn form- und kraftschlüssig aufnehmende Kupplungsklaue mit einem quer zur Antriebsrichtung der Antriebsstange federbeaufschlagten und gegen den Kupplungskopf drückenden Keilschuh gebildet ist. Bevorzugte Ausführungsformen sind in den Unteransprüchen beansprucht. Durch das form- und kraftschlüssige Zusammenwirken dieser Teile arbeitet die Kupplung stets vollkommen spielfrei.

Es ist fertigungstechnisch vorteilhaft, wenn der Kupplungskopf als ein Formteil mit T-förmigem Querschnitt ausgebildet ist, das sich aus einem stirnseitigen Greifsteg und einem daran anschliessenden Mittelsteg zusammensetzt.

Es ist ebenfalls fertigungstechnisch von Vorteil, wenn die Kupplungsklaue als ein Formteil mit U-förmigem Querschnitt ausgebildet ist, das sich aus einer Stirnwand, einer Rückwand, zwei Seitenwänden und einer Bodenplatte zusammensetzt, wobei die Stirnwand einen mittigen Aufnahmeschlitz für den Mittelsteg des Kupplungskopfes aufweist, während die Rückwand und die Bodenplatte mit Stutzflächen für den Keilschuh bzw. für die diesen beaufschlagenden Federn versehen sind.

Um eine gleichmässige Federbeaufschlagung des Keilschuhs zu erzielen, sieht die Erfindung vor, dass der Keilschuh durch zwei symmetrisch zur Längsachse der Antriebstange angeordnete Federn beaufschlagt ist.

Erfindungsgemäss ist der Keilschuh mit einer durch die Bodenplatte der Kupplungsldaue mittig geführten Stellschraube gehalten, die im Keilschuh eingeschraubt ist.

Durch Betätigen der Stellschraube kann man die Einbaulage des Keilschuhs im Inneren der Kupplungsklaue fein justieren uns somit etwaige Fertigungs- oder Montagetoleranzen der Kupplungsteile kompensieren.

Um den Kupplungsvorgang zu erleichtern, ist es zweckmässig, die aneinanderstossenden Flächen beider Kupplungsteile mit abgeschrägten Kanten zu versehen.

Zwecks einer bequemen Ankoppelung der beweglichen Schieberplatte an ihren Antrieb ist es vorteilhaft, wenn der Kupplungskopf an der Schubstange und die Kupplungsklaue an der Antriebsstange angeordnet sind.

Zweckmässigerweise ist der Kupplungskopf als integraler Bestandteil der Schubstange ausgebildet, so dass in beiden Teilen sonstige Verbindungselemente entbehrlich sind.

Um schnell und bequem die Verbindung der Antriebsstange mit der Kupplungsklaue herzustellen, weist diese in ihrer Rückwand eine Gewindebohrung auf, in welcher das ausstehende Ende der Antriebsstange eingeschraubt ist.

Die Erfindung sieht ferner vor, dass die Kupplung in den Schiebeverschluss als eine Baueinheit bestehend aus der Kupplungsklaue und dem Kupplungskopf mit integrierter Schubstange einbaubar ist. Dadurch ist es mögliche die erfindungsgemässe Kupplung leicht in vorhandene Schieberverschlüsse nachträglich einzubauen.

Die Erfindung wird nachfolgend anhand eines Ausführungsbeispiels unter Bezugnahme auf die Zeichnung näher erläutert. Es zeigen:
- Fig. 1: einen Schiebeverschluss mit einer erfindungsgemässen Kupplung zwischen der Schubstange und der Antriebsstange des Antriebs,
- Fig. 2: die Kupplung aus Fig. 1 in der Seitenansicht, teilweise im Schnitt und ver- grössert dargestellt,
- Fig. 3: die Kupplung aus Fig.1 in der Draufsicht, ebenfalls vergrössert dargestellt,
- Fig. 4: einen Schnitt durch die Kupplung entlang der Linie N-IV in Fig. 3,
- Fig. 5: eine Ansicht der Kupplung in Richtung des Pfeils V in Fig. 2,

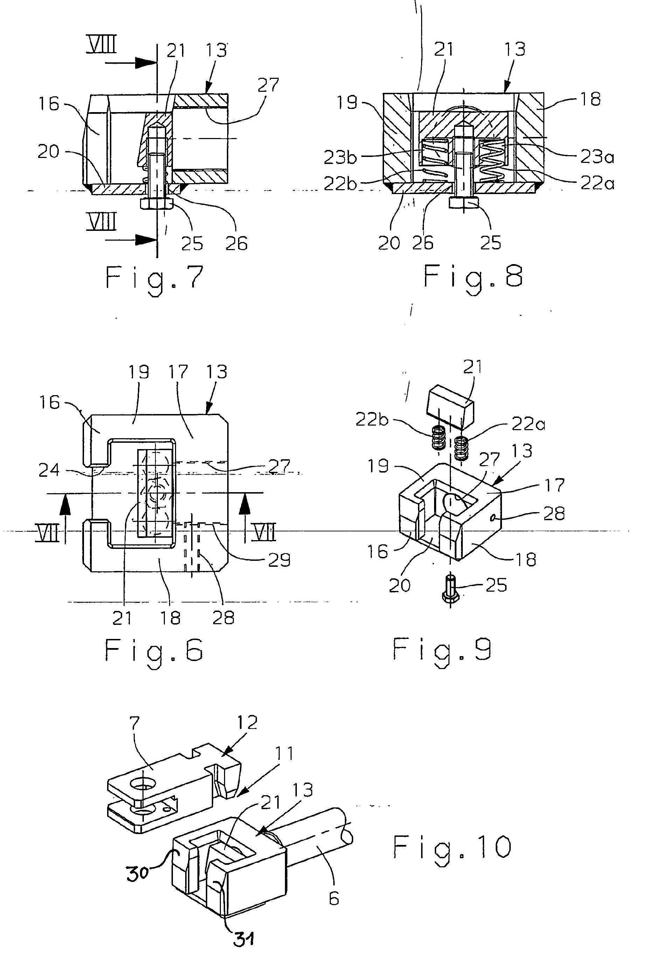

- Fig. 6: die Kupplungsklaue der Kupplung aus Fig. 1, in der Draufsicht und vergrös- sert dargestellt,
- Fig. 7: einen Schnitt durch die Kupplungsklaue entlang der Linie VII-VII in Fig. 6,
- Fig. 8: einen Schnitt durch die Kupplungsklaue entlang der Linie VIII-VIII in Fig. 7,
- Fig. 9: die Kupplungsklaue aus Fig. 6, als Explosionsansicht dargestellt, und
- Fig. 10: die Kupplung aus Fig. 2, ebenfalls als Explosionsansicht dargestellt.

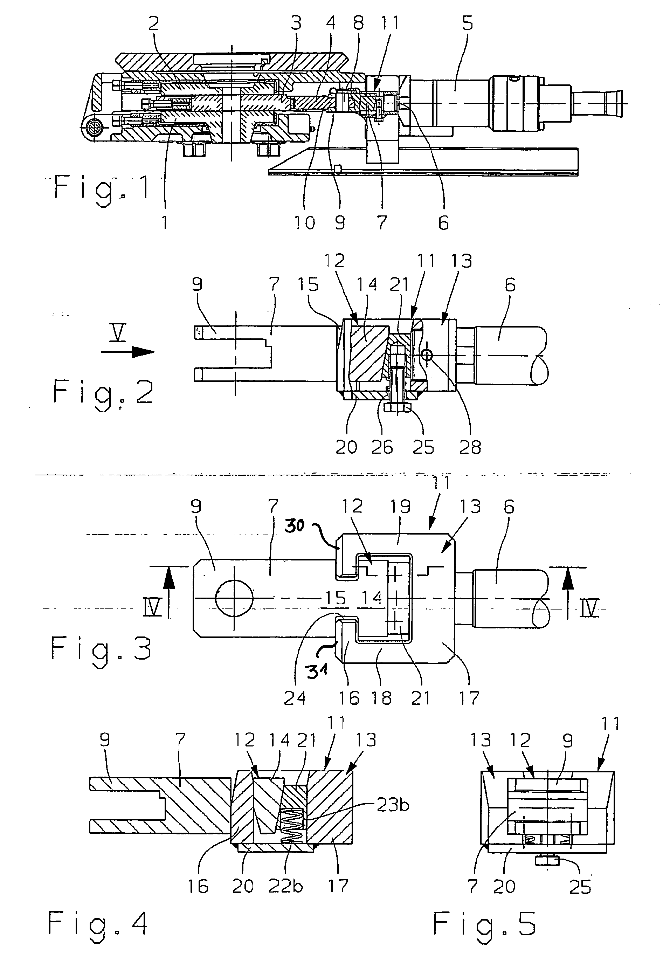

Der in Fig. 1 gezeigte Schiebeverschluss an einem nicht näher gezeigten Zwischenverteiler weist zwei ortsfeste Schieberplatten 1, 2 und eine dazwischenliegende bewegliche Schieberplatte 3 auf, die in einem Schieberplattenrahmen 4 eingespannt ist. Letzterer ist zusammen mit der beweglichen Schieberplatte 3 durch einen Hydraulikzylinder 5 antreibbar, dessen Antriebsstange 6 mit einer am Schieberplattenrahmen 4 befestigten Schubstange 7 verbunden ist. Die Befestigung erfolgt mittels eines Bolzens 8, der durch einen Gabelkopf 9 der Schubstange 7 und einen in den Gabelkopf 9 ragenden Ansatz 10 des Schieberplattenrahmens 4 hindurchgeht.

Die Verbindung zwischen der Antriebsstange 6 und der Schubstange 7 wird durch eine Kupplung 11 hergestellt, die mit einem Kupplungskopf 12 und einer diesen form- und kraftschlüssig aufnehmenden Kupplungsklaue 13 versehen ist.

Der Kupplungskopf 12 ist als ein in der Schubstange 7 integriertes Formteil mit T-förmigem Querschnitt ausgebildet, das sich aus einem stirnseitigen Greifsteg 14 und einer Mittelsteg 15 zusammensetzt.

Die Kupplungsklaue 13 ist ihrerseits als ein Formteil mit U-förmigem Querschnitt ausgebildet, das sich aus einer Stirnwand 16, einer Rückwand 17, zwei Seitenwänden 18, 19 sowie einer Bodenplatte 20 zusammensetzt. Darin ist ein Keilschuh 21 angeordnet, der durch zwei Federn 22a, 22b quer zur Antriebsrichtung der Antriebsstange 6 beaufschlagt ist und rückseitig gegen die Rückwand 17 der Kupplungsklaue 13 abgestützt ist. Die Federn 22a, 22b sind symmetrisch zur Längsachse der Antriebsstange 6 in Blindbohrungen 23a, 23b des Keilschuhs 21 angeordnet und gegen die Bodenplatte 20 der Kupplungsklaue 13 abgestützt. In deren Stirnwand 16 ist ein mittiger Aufnahmeschlitz 24 für den Mittelsteg 15 des Kupplungskopfes 12 vorgesehen.
Der Keilschuh 21 ist mit einer Stellschraube 25 gehalten, die durch eine Bohrung 26 der Bodenplatte 20 mittig zwischen den Federn 22a, 22b geführt ist. Die Stellschraube 25 ist mehr oder weniger tief in den Keilschuh 21 einschraubbar, derart, dass sie im Betrieb nicht an der Bodenplatte 20 ansteht, so dass sich der Keilschuh 21 quer zur Verschieberichtung in der Höhe verstellen kann. Indessen kann der Keilschuh 21 bei der Montage mittels dieser Stellschraube 25 bis zur spielfreien Kupplung in Position gebracht werden. Hingegen bei der Demontage kann die Stellschraube 25 eingeschraubt und damit der-Keilschuh-21 und mit ihm die Kupplung 11 vom Kraftschluss gelöst werden.

Die Rückwand 17 der Kupplungsklaue 13 weist eine mittig angeordnete Gewindebohrung 27 auf, in welcher das ausstehende Ende der Antriebsstange 6 eingeschraubt ist. In der Kupplungsklaue 13 ist ausserdem ein Drehsicherungsstift 28 vorgesehen, welcher in eine Längsnut 29 der Antriebsstange 6 hineinragt.

Wie in Fig. 3 ersichtlich, wird der Mittelsteg 15 des Kupplungskopfes 12 im Aufnahmeschlitz 24 der Kupplungsklaue 13 formschlüssig aufgenommen. Durch den Anpressdruck des Keilschuhs 21 gegen den Greifsteg 14 des Kupplungskopfes 12 ergibt sich gleichzeitig zwischen beiden Teilen eine spielfreie Klemmwirkung. Dadurch wird zwischen dem Kupplungskopf 12 und der Kupplungsklaue 13, und somit zwischen der Schubstange 7 und der Antriebsstange 6 eine sowohl form- als auch kraftschlüssige Verbindung hergestellt.

Die beschriebene Kupplung 8 bildet eine Baueinheit bestehend aus der Kupplungsklaue 13 und dem Kupplungskopf 12 mit integrierter Schubstange 7, die auch nachträglich in herkömmliche Schierverschlüsse einbaubar ist. Hierbei ist es nur erforderlich, die Kupplungsklaue 13 an die Antriebsstange 6 festzuschrauben und die Schubstange 7 mittels des Bolzens 8 mit dem Schieberplattenrahmen 4 zu verbinden. Die Koppelung wird durch Einstecken des Kupplungskopfes 12 in die Kupplungsklaue 13 durchgeführt. Um diese Operation zu erleichtern, sind die Kanten der aneinanderstossenden Flächen beider Kupplungsteile 12 und 13 abgeschrägt.

Die Erfindung ist mit dem erläuterten Ausführungsbeispiel ausreichend dargetan. Sie könnte jedoch noch anders vorgesehen sein. So könnte zum Beispiel nur eine Feder 22 vorhanden sein.

## Patentansprüche

1. Schiebeverschluss für einen Zwischenverteiler oder ähnliche metallurgische Gefässe, dessen bewegliche Schieberplatte (3) durch einen Antrieb mit einer Antriebsstange (6) und einer mit ihr verbundenen Schubstange (7) antreibbar ist, wobei die Verbindung zwischen der Antriebsstange (6) und der Schubstange (7) durch eine zwischen den gegenüberliegenden Enden beider Stangen angeordnete Kupplung (11) mit zwei ineinandergreifenden Kupplungsteilen (12, 13) gebildet ist, **dadurch gekennzeichnet, dass**
die Kupplung (11) durch einen Kupplungskopf (12) und eine ihn form- und kraftschlüssig bzw. spielfrei aufnehmende Kupplungsklaue (13) mit einem quer zur Antriebsrichtung der Antriebsstange (6) federbeaufschlagten und gegen den Kupplungskopf (12) drückenden Keilschuh (21) gebildet ist.

2. Schiebeverschluss nach Anspruch 1,
**dadurch gekennzeichnet, dass**
der Kupplungskopf (12) als ein Formteil mit T-förmigem Querschnitt ausgebildet ist, das sich aus einem stirnseitigen Greifsteg (14) und einem daran anschliessenden Mittelsteg (15) zusammensetzt.

3. Schiebeverschluss nach Anspruch 1,
**dadurch gekennzeichnet, dass**
die Kupplungsklaue (13) als ein Formteil mit U-förmigem Querschnitt ausgebildet ist, das sich aus eine Stirnwand (16), einer Rückwand (17), zwei Seitenwänden (18, 19) und einer Bodenplatte (20) zusammensetzt, wobei die Stirnwand (16) einen mittigen Aufnahmeschlitz (24) für den Mittelsteg (15) des Kupplungskopfes (12) aufweist, während die Rückwand (17) und die Bodenplatte (20) mit Stützflächen für den Keilschuh (21) bzw. für die diesen beaufschlagenden Federn (22a, 22b) versehen sind.

4. Schiebeverschluss nach Anspruch 3,
**dadurch gekennzeichnet, dass**
der Keilschuh (21) durch wenigstens eine zur Längsachse der Antriebsstange (6) angeordnete Feder (22a, 22b) beaufschlagt ist.

5. Schiebeverschluss nach Anspruch 3 oder 4,
**dadurch gekennzeichnet, dass**
der Keilschuh (21) mit einer durch die Bodenplatte (20) der Kupplungsklaue (13) mittig geführten Stellschraube (25) verbunden ist, welche im Betrieb nicht an der Bodenplatte (20) ansteht, so dass sich der Keilschuh (21) quer zur Verschieberichtung in der Höhe verstellen kann.

6. Schiebeverschluss nach Anspruch 5,
**dadurch gekennzeichnet, dass**
der Keilschuh (21) beim Kuppeln mittels genannter Stellschraube (25) bis zur spielfreien Kupplung in Position bringbar ist, indessen beim Entkuppeln die Stellschraube (25) einschraubbar ist und damit der Keilschuh (21) und mit ihm die Kupplung (11) lösbar ist.

7. Schiebeverschluss nach einem der Ansprüche 1 bis 6,
**dadurch gekennzeichnet, dass**
die aneinanderstossenden Flächen des Kupplungskopfes (12) und der Kupplungsklaue (13) mit abgeschrägten Kanten (30, 31) versehen sind.

8. Schiebeverschluss nach Anspruch 7,
**dadurch gekennzeichnet, dass**
der Kupplungskopf (12) als integraler Bestandteil der Schubstange (7) ausgebildet ist.

9. Kupplung für einen Schiebeverschluss nach einem der vorhergehenden Ansprüche, die in den Schiebeverschluss als eine Baueinheit bestehend aus der Kupplungsklaue (13) und dem Kupplungskopf (12) mit integrierter Schubstange (7) einbaubar ist, wobei eine zwischen den gegenüberliegenden Enden der Schubstange (7) und einer Antriebsstange (6) angeordnete Kupplung (11) mit zwei ineinandergreifenden Kupplungsteilen (12, 13) gebildet ist, **dadurch gekennzeichnet, dass** die Kupplung (11) durch einen Kupplungskopf (12) und eine ihn form- und kraftschlüssig bzw. spielfrei aufnehmende Kupplungsklaue (13) mit einem quer zur Antriebsrichtung der Antriebsstange (6) federbeaufschlagten und gegen den Kupplungskopf (12) drückenden Keilschuh (21) gebildet ist.

## Claims

1. Sliding closing element for an intermediate distributor or similar metallurgical containers, the mobile sliding plate (3) of which can be driven by means of a drive comprising a driving rod (6) and a push rod (7) connected thereto, whereby the connection between the driving rod (6) and the push rod (7) is formed by a coupling (11) arranged between the opposite ends of the two rods with two coupling parts (12, 13) that engage each other, **characterised in that**
the coupling (11) is formed by a coupling head (12) and a coupling claw (13) that is received into the same by means of form and force closure, respective without play, with a wedge shoe (21) spring tensioned transversely in relation to the driving direction of the driving rod (6) and supported against the wedge shoe (21) pressing against the coupling head (12).

2. Sliding closing element according to claim 1, **characterised in that** the coupling head (12) consists of a component with a T-shaped cross-section that comprises a facing side engaging bridge (14) and an adjacent middle bridge (15).

3. Sliding closing element according to claim 1, **characterised in that** the coupling claw (13) consists of a component with a U-shaped cross-section comprising a facing wall (16), a rear wall (17), two side walls (18, 19) and a floor plate (20), whereby the facing wall (16) comprises a central receiving slot (24) for the middle bridge (15) of the coupling head (12), whilst the rear wall (17) and the floor plate (20) are equipped with support surfaces for the wedge shoe (21) respective for the springs (22a, 22b) tensioning the same.

4. Sliding closing element according to claim 3, **characterised in that** the wedge shoe (21) is tensioned by means of at least one spring (22a, 22b) arranged along the longitudinal axis of the driving rod (6).

5. Sliding closing element according to claim 3 or 4, **characterised in that** the wedge shoe (21) is connected with a set screw (25) inserted through the centre of the floor plate (20) of the coupling claw (13), which does not contact the floor plate (20) during operation, so that the height of the wedge shoe (21) can be adjusted transversely in relation to the driving direction.

6. Sliding closing element according to claim 5, **characterised in that** the wedge shoe (21) can be held in position by means of mentioned set screw (25) during coupling until the play free coupling is complete, whereas the set screw (25) can be screwed in further during de-coupling and therewith the wedge shoe (21) and with it the coupling (11) can be solved.

7. Sliding closing element according to one of the claims 1 to 6, **characterised in that** the abutting surfaces of the coupling head (12) and the coupling claw (13) are equipped with tapered edges (30, 31).

8. Sliding closing element according to claim 7, **characterised in that** the coupling head (12) is formed as integrated part of the push rod (7).

9. Coupling for a sliding closing element according to one of the preceding claims, the same can be installed into the sliding closing element as a construction assembly consisting of the coupling claw (13) and the coupling head (12) with integrated push rod (7), whereby a coupling (11) with two coupling parts (12, 13) engaging each other is formed, which is arranged between the opposite ends of the push rod (7) and a driving rod (6), **characterised in that**
the coupling (11) is formed by a coupling head (12) and a coupling claw (13) that is received into the same by means of form and force closure, respective without play, with a wedge shoe (21) spring tensioned transversely in relation to the driving direction of the driving rod (6) and supported against the wedge shoe (21) pressing against the coupling head (12).

## Revendications

1. Fermeture coulissante pour un distributeur intermédiaire ou des récipients métallurgiques similaires, dont la plaque coulissante mobile (3) peut être entraînée par un entraînement comprenant une bielle d'entraînement (6) et une bielle de poussée (7) reliée à celle-ci, la liaison entre la bielle d'entraînement (6) et la bielle de poussée (7) étant formée par un accouplement (11) disposé entre les extrémités opposées des deux bielles et comprenant deux parties d'accouplement (12, 13) s'engrenant l'une dans l'autre, **caractérisée en ce que** l'accouplement (11) est formé par une tête d'accouplement (12) et une griffe d'accouplement (13) le recevant par coopération de formes et de forces ou sans jeu et doté d'un sabot cunéiforme (21) sollicité par des ressorts transversalement à la direction d'entraînement de la bielle d'entraînement (6) et pressant contre la tête d'accouplement (12).

2. Fermeture coulissante selon la revendication 1,
**caractérisée en ce que**
la tête d'accouplement (12) est conçue comme une pièce moulée présentant une section transversale en forme de T et se composant d'une nervure de saisie avant (14) et d'une nervure centrale (15) raccordée à celle-ci.

3. Fermeture coulissante selon la revendication 1,
**caractérisée en ce que**
la griffe d'accouplement (13) est conçue comme une pièce moulée présentant une section transversale en U se composant d'une paroi avant (16), d'une paroi arrière (17), de deux parois latérales (18, 19) et d'une plaque de fond (20), la paroi avant (16) comprenant une fente de réception centrale (24) pour la nervure centrale (15) de la tête d'accouplement (12), tandis que la paroi arrière (17) et la plaque de fond (20) sont pourvues de surfaces d'appui pour le sabot cunéiforme (21) ou pour les ressorts (22a, 22b) sollicitant ledit sabot.

4. Fermeture coulissante selon la revendication 3,
**caractérisée en ce que**
le sabot cunéiforme (21) est sollicité par au moins un ressort (22a, 22b) disposé par rapport à l'axe longitudinal de la bielle d'entraînement (6).

5. Fermeture coulissante selon la revendication 3 ou 4,
**caractérisée en ce que**
le sabot coulissant (21) est relié à une vis de réglage (25) guidée au centre par la plaque de fond (20) de la griffe d'accouplement (13) et non adjacente à la plaque de fond (20) pendant l'utilisation, de sorte que le sabot cunéiforme (21) puisse se déplacer en hauteur transversalement à la direction de coulissement.

6. Fermeture coulissante selon la revendication 5,
**caractérisée en ce que**
le sabot cunéiforme (21), lors du couplage, peut être amené en position au moyen de ladite vis de réglage (25) jusqu'à l'accouplement sans jeu, mais la vis de réglage (25) peut être vissée pendant le découplage et de ce fait le sabot cunéiforme (21) et avec lui l'accouplement (11) peuvent être serrés.

7. Fermeture coulissante selon l'une quelconque des revendications 1 à 6,
**caractérisée en ce que**
les surfaces contiguës de la tête d'accouplement (12) et de la griffe d'accouplement (13) sont pourvues d'arêtes chanfreinées (30, 31).

8. Fermeture coulissante selon la revendication 7,
**caractérisée en ce que**
la tête d'accouplement (12) fait partie intégrante de la bielle de poussée (7).

9. Accouplement pour une fermeture coulissante selon l'une quelconque des revendications précédentes pouvant être monté dans la fermeture coulissante sous forme d'unité modulaire constituée de la griffe d'accouplement (13) et de la tête d'accouplement (12) intégrant la bielle de poussée (7), un accouplement (11) disposé entre les extrémités opposées de la bielle de poussée (7) et d'une bielle d'entraînement (6) étant constitué de deux parties d'accouplement (12, 13) s'engrenant l'une dans l'autre,
**caractérisé en ce que**
l'accouplement (11) est formé par une tête d'accouplement (12) et une griffe d'accouplement (13) le recevant par coopération de formes et de forces ou sans jeu et comprenant un sabot conique (21) sollicité par un ressort transversalement à la direction d'entraînement de la bielle d'entraînement (6) et pressant contre la tête d'accouplement (12).
